# EUROPÄISCHE PATENTSCHRIFT

(11) **EP 0 526 830 B1**
(45) Veröffentlichungstag und Bekanntmachung des Hinweises auf die Patenterteilung: **06.12.1995**
(21) Anmeldenummer: 92112901.1
(22) Anmeldetag: 29.07.1992
(51) Int. Cl.: F16C 32/06

(54) **Gasdrucklager**
Gas pressure bearing
Palier sous pression de gaz

(30) Priorität: 03.08.1991 DE 4125802
(43) Veröffentlichungstag der Anmeldung: 10.02.1993
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Enderle, Eckhard, W-7080 Aalen-Dewangen (DE); Ähnelt, Peter, W-7082 Oberkochen (DE)

(56) Entgegenhaltungen:
- EP-A- 0 143 471
- EP-A- 0 434 645
- DE-A- 2 544 872
- DE-A- 3 010 741
- DE-A- 3 441 426
- FR-A- 2 197 422
- FR-A- 2 485 668
- GB-A- 2 027 137

## Beschreibung

Die vorliegende Erfindung betrifft ein Gasdrucklager nach dem Oberbegriff des Anspruchs 1.

Solche Gasdrucklager finden Verwendung zum Lagern von Bauteilen, die leicht und mit hoher Präzision auf einer Unterlage zu verschieben sind. Um die erforderliche Präzision zu erreichen ist es notwendig Lager mit sehr hoher Steifigkeit zu verwenden, bei denen der Lagerspalt unabhängig von der Belastung des Lagers weitgehend konstant gehalten wird.

Ein solches Gasdrucklager ist aus der DE-A-2 544 872 bekannt, dessen Tragseite als Membran ausgebildet ist, wobei die Membran aus einer Scheibe mit durchgehender Zentrierbohrung besteht und auf einer Ringauflage am Grundkörper des Lagers befestigt ist. Der Grundkörper besitzt eine Zentrierbohrung, die mit einem Gaseinlaß verbunden ist und in die ein durchbohrter zylinderförmiger und mit der Scheibe verbundener Einsatz formschlüssig eingesetzt ist. Da die Membran mit dem Grundkörper und dem Einsatz fest verbunden ist, das Lager somit eine Einheit bildet, können die einzelnen Bestandteile nicht ohne weiteres einfach ausgewechselt werden.

Weiter ist aus der DE-A-3 343 470 (=EP-A-0 143 471) ein Gasdrucklager bekannt, das aus einem Grundkörper besteht, der mit einem Gaseinlaß versehen ist und mit dem die Membran fest verbunden ist. Die Verbindungsteile sind so ausgebildet, daß sie als Kipplager wirken und eine Verformung der Membran, insbesondere deren konkave Verformung durch den Lagerdruck ermöglichen.

Die Gesamtsteifigkeit eines solchen Gasdrucklagers wird wesentlich von der Mechanik, d.h. von der Verbindungsmechanik des das Lager bildenden Grundkörpers mit dem zu tragenden Bauteil bestimmt. Außerdem beeinflussen die zur Halterung der Membran dienende Kipplager die Gesamtsteifigkeit nachteilig.

Es ist die Aufgabe der vorliegenden Erfindung ein Gasdrucklager zu schaffen, das sich durch eine sehr hohe Gesamtsteifigkeit und einen großen Lastbereich auszeichnet und das zudem nur wenige einfache Bauteile aufweist.

Diese Aufgabe wird durch ein Gasdrucklager gelöst, das nach den kennzeichnenden Merkmalen des Anspruchs 1 aufgebaut ist.

Bei dem Gasdrucklager nach der Erfindung ist die Membran ein gesondertes Bauteil, das lose auf einer Ringauflage aufliegt und nur durch den eingesteckten zylinderförmigen Einsatz gehalten und zentriert wird. Über diesen zylinderförmigen Einsatz wird das Gas auf die Tragseite der Membran zugeführt.

Die Ringauflage ist zweckmäßig direkt mit dem vom Lager zu tragenden Bauteil fest verbunden. In diesem Fall entfällt eine zusätzliche mechanische Verbindung des Gasdrucklagers mit dem Bauteil, so daß die Gesamtsteifigkeit nur von der Steifigkeit des Lagerspaltes bestimmt ist. Durch die lose aufliegende Membran ist deren Verformung unter Last gegenüber Lagern mit fest verbundener Membran deutlich verbessert. Die Steifigkeit des Lagerspaltes wird sogar negativ, d.h. mit zunehmender Last hebt das Lager weiter ab. Es läßt sich damit eine nahezu unendlich hohe Gesamtsteifigkeit erreichen.

Selbst wenn die Ringauflage fest auf einem Grundkörper angeordnet ist, der über eine Mechanik mit dem zu tragenden Bauteil verbunden wird, wird durch die verbesserte Funktion der Membran, d.h. durch die erreichte negative Steifigkeit des Lagerspaltes und die unbeeinflußte Durchbiegbarkeit der Membran die Gesamtsteifigkeit des Lagers gegenüber bisher bekannten Gasdrucklagern wesentlich verbessert.

Die hohe Steifigkeit des Lagers erlaubt seinen Einsatz in einem größeren Lastbereich als die bekannten Lager. Es ist beispielsweise möglich den gleichen Anwendungsbereich mit weniger Lagergrößen abzudecken.

Das Gasdrucklager nach der Erfindung kommt mit wenigen einfachen Bauteilen aus. Es ermöglicht einen einfachen Austausch der Membran z.B. den Einsatz von verschieden dicken Membran oder von solchen aus unterschiedlichen Werkstoffen.

Besonders vorteilhaft ist es eine Membran zu verwenden, die auf ihrer Tragseite einen Belag aus einem Gleitkunststoff trägt. Das Lager erhält damit eine gute Notlaufeigenschaft.

Aus der EP-B-0 208 122 ist ein Luftlager für rotierende Wellen bekannt, bei dem auf die Welle Formkörper aus einem Kunststoff aufgezogen sind, der Notlaufeigenschaften aufweist. Verwendet wird Hart-Polyvenylchlorid, das beispielsweise auch zur Beschichtung der Membran des Gasdrucklagers nach der Erfindung verwendet werden kann.

Der zylinderförmige Einsatz, der bei dem neuen Gasdrucklager verwendet ist, ermöglicht das Aufstecken der Membran auf das die Ringauflage tragende Bauteil. Die Membran ist damit bezüglich der Ringauflage zentriert und fixiert. Zugleich wird über den zylinderförmigen Einsatz Luft vom Gaseinlaß zum Lagerspalt geführt. Der Einsatz ist an seinem der Tragseite der Membran zugewandten Ende mit einem zum Gasauslaß dienenden Düseneinsatz versehen. Je nach Ausführung des Düseneinsatzes kann er auch als Konstantdrossel und/oder als Luftfilter dienen.

Zweckmäßige Ausgestaltungen des zylinderförmigen Einsatzes sind Gegenstand der Unteransprüche 6 und 7.

Anspruch 8 beschreibt eine Ausbildung des Gasdrucklagers, bei der sich der Druck im Raum über der Membran und damit die Verformung der Membran beeinflussen läßt.

Das Gasdrucklager nach der Erfindung findet Verwendung zur Lagerung von Maschinenteilen und besonders vorteilhaft zur Lagerung von Teilen einer Mehrkoordinatenmeßmaschine, bei der es auf eine besonders hohe Präzision der Lagerung ankommt.

Die Erfindung wird im folgenden anhand der Figuren 1-6 der beigefügten Zeichnungen näher erläutert. Im einzelnen zeigen:
- Figur 1: ein Ausführungsbeispiel in Explosions-Darstellung;
- Figur 2: einen Längsschnitt durch den in Figur 1 verwendeten zylinderförmigen Einsatz;
- Figur 3: das Lager der Figur 1 in Gebrauchstellung, wobei die Größe des Lagerspaltes übertrieben dargestellt ist;
- Figur 4: ein anderes Ausführungsbeispiel in Explosions-Darstellung;
- Figur 5: ein drittes Ausführungsbeispiel in Explosions-Darstellung;
- Figur 6: Kennlinien Last/Lagerspalt für ein bekanntes und ein nach der Erfindung ausgebildetes Gasdrucklager.

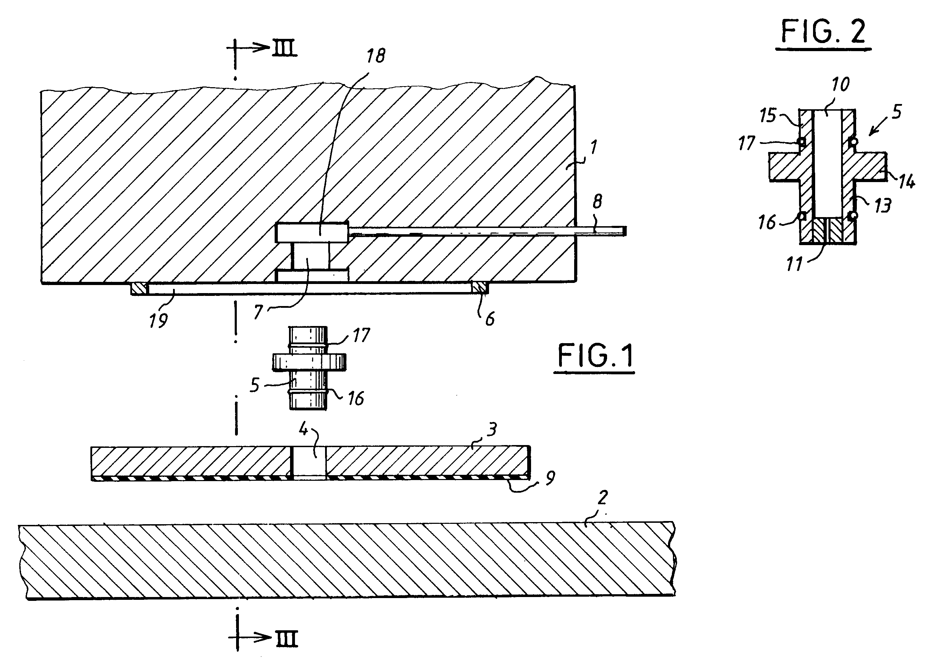

In Figur 1 ist ein Gasdrucklager nach der Erfindung dargestellt, das zur Lagerung eines Maschinenteiles (1) auf einer Unterlage (2) dient. Das Lager selbst besteht aus einer runden Scheibe (3), die mit einer durchgehenden Zentrierbohrung (4) versehen ist, einem zylinderförmigen Einsatz (5) und einer Ringauflage (6), die im dargestellten Ausführungsbeispiel direkt an dem zu lagernden Teil (1) befestigt ist. Diese Befestigung kann beispielsweise durch Ankleben der Ringauflage (6) bewirkt werden. Das Maschinenteil (1) ist innerhalb der Ringauflage (6) mit einer Zentrierbohrung (7) versehen, die mit einem Gaseinlaß (8) verbunden ist.

Die Scheibe (3) stellt die Membran des Gasdrucklagers dar. Ihre, der Unterlage (2) zugewandte Fläche trägt einen Belag (9) aus einem handelsüblichen Gleitkunststoff. Der Belag (9) hat beispielsweise eine Dicke von ungefähr 1 mm und ist auf seiner freien Fläche glatt und eben bearbeitet. Er vermittelt dem Lager eine gewisse Notlaufeigenschaft, für den Fall, daß bei einer Störung der Gaszufuhr die Scheibe (3) direkt auf der Unterlage (2) aufsitzt. Die Scheibe (3) selbst besteht beispielsweise aus einer Aluminiumlegierung.

Der zylinderförmige Einsatz (5), dessen Längsschnitt in Figur 2 dargestellt ist, ist zentral durchbohrt. In seine Bohrung (10) ist auf dem, der Tragseite der Scheibe (3) zugewandten Ende ein zum Gasauslaß dienender Düseneinsatz (11) eingesetzt. Über diesen tritt Luft in den vom Belag (9) der Scheibe (3) und der Unterlage (2) gebildeten Lagerspalt (12) ein. Der Einsatz (5) besteht aus drei, axial hintereinander angeordneten Abschnitten (13, 14, 15). Der erste Abschnitt (13), welcher den Düseneinsatz (11) trägt wird in die Zentrierbohrung (4) der Scheibe (3) eingesteckt. Der zweite Abschnitt (14) ist als Scheibe ausgebildet, deren Durchmesser größer ist, als der des ersten Abschnittes (13). Der dritte Abschnitt (15) hat wiederum einen kleineren Durchmesser als die Scheibe (14). Der Einsatz (5) trägt in seinem ersten und dritten Abschnitt (13) bzw. (15) je einen Dichtring (16) bzw. (17).

Die Zentrierbohrung (7) im Maschinenteil (1) hat die Negativform der Abschnitt (14) und (15) des Einsatzes (5). An diesen Bohrungsteil schließt sich ein Raum (18) an, der mit einem Gaseinlaß (8) in Verbindung steht.

Beim Zusammenbau des Gasdrucklagers wird der Einsatz (5) in die Bohrungen (7) und (4) von Maschinenteil (1) und Scheibe (3) eingesteckt. Dabei bildet die tragseitige Fläche der Scheibe (14) des Einsatzes (5) mit der zwischen der Ringauflage (6) liegenden Fläche (19) des Teiles (1) eine Ebene. Das durch den Einlaß (8) zugeführte Gas, vorzugsweise Luft tritt über den Raum (18) und die Bohrung (10) auf der Tragseite der Scheibe (3) durch den Düseneinsatz (11) in den Lagerspalt (12) aus.

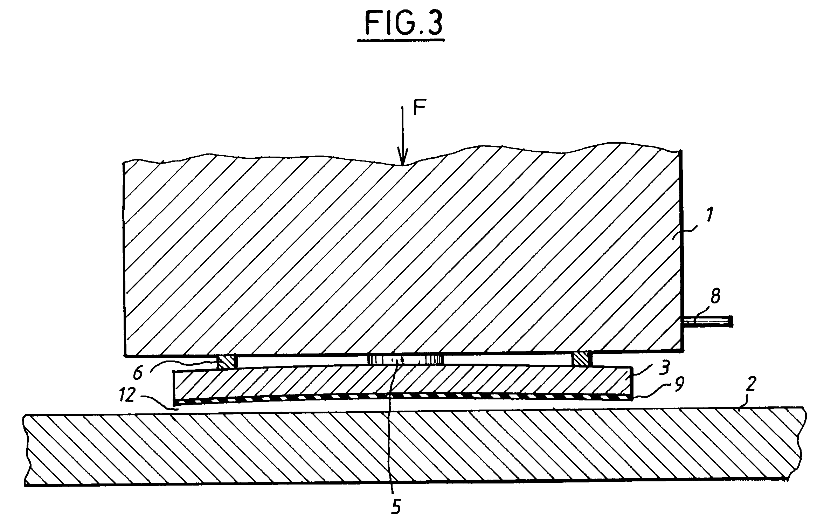

Figur 3 zeigt das Gasdrucklager in Funktion. Das Maschinenteil (1) wirkt mit einer Kraft (F) in Richtung des Pfeiles. Diese Kraft versucht den Lagerspalt (12) zu komprimieren, wodurch sich der Druck in diesem Spalt erhöht. Unter der Wirkung dieses Druckes wird die Scheibe (3) konkav durchgebogen. Dadurch, daß die Scheibe (3) lose auf der Ringauflage (6) aufliegt wird diese Durchbiegung nicht behindert, d.h. die Scheibe (3) kann ihre Form frei von irgendwelchen Zwangseinflüssen einnehmen. Durch die Bewegung der Scheibe (3) wird der Abstand zwischen der tragseitigen Fläche der Scheibe (3) und der Unterlage (2) wieder auf den Wert gebracht, den er im unbelasteten Zustand besaß.

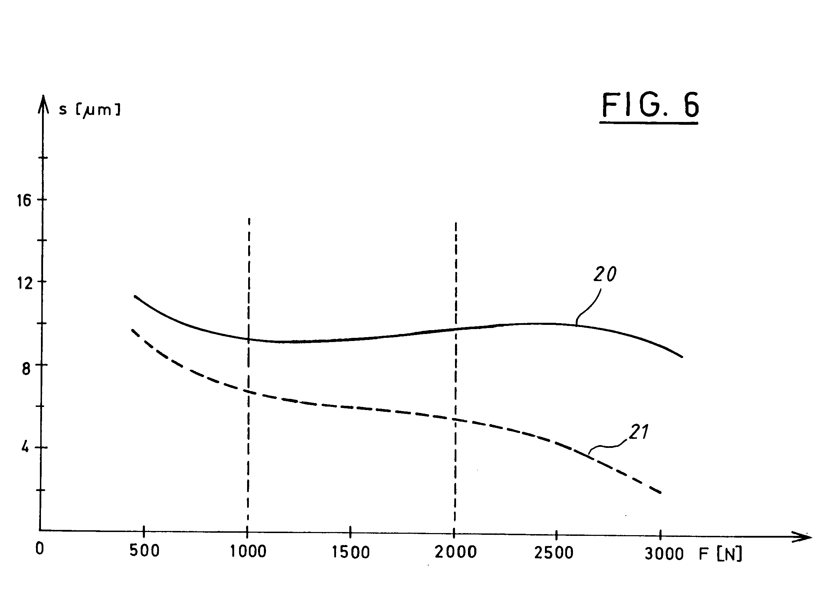

Wie die Kennlinie (20) der Figur 6 zeigt, tritt bei dem Gasdrucklager nach der Erfindung der Effekt ein, daß mit zunehmender Last (F) der Lagerspalt größer wird, d.h. das Lager hebt gegenüber dem unbelasteten Zustand weiter ab. Die Steifigkeit des Lagerspaltes ist also negativ. Da diese Steifigkeit mit ihrem reziproken Wert in die Formel für die Gesamtsteifigkeit des Lagers eingeht, erreicht die Gesamtsteifigkeit sehr hohe Werte.

Die Kennlinie (20) der Figur 6 zeigt auch deutlich, daß das Gasdrucklager nach der Erfindung in einem sehr großen Lastbereich (z.B. 1000/2000 N) einsetzbar ist. Dieser Lastbereich ist deutlich größer als bei einem der bisher bekannten Gasdrucklager, dessen Kennlinie in Figur 6 mit (21) bezeichnet ist.

Die Figuren 1 und 2 zeigen, daß das Gasdrucklager nach der Erfindung mit wenigen einfachen Bauteilen auskommt. Sowohl die Membran des Lagers, d.h. die Scheibe (3) als auch der Einsatz (5) und damit die Düseneinsätze für den Gasauslaß sind schnell und einfach austauschbar. Das Lager nach den Figuren 1 und 2 zeichnet sich ferner durch eine extrem niedere Bauhöhe aus. Es weist außerdem gute Notlaufeigenschaft auf. Die Gesamtsteifigkeit dieses Lagers ist extrem hoch.

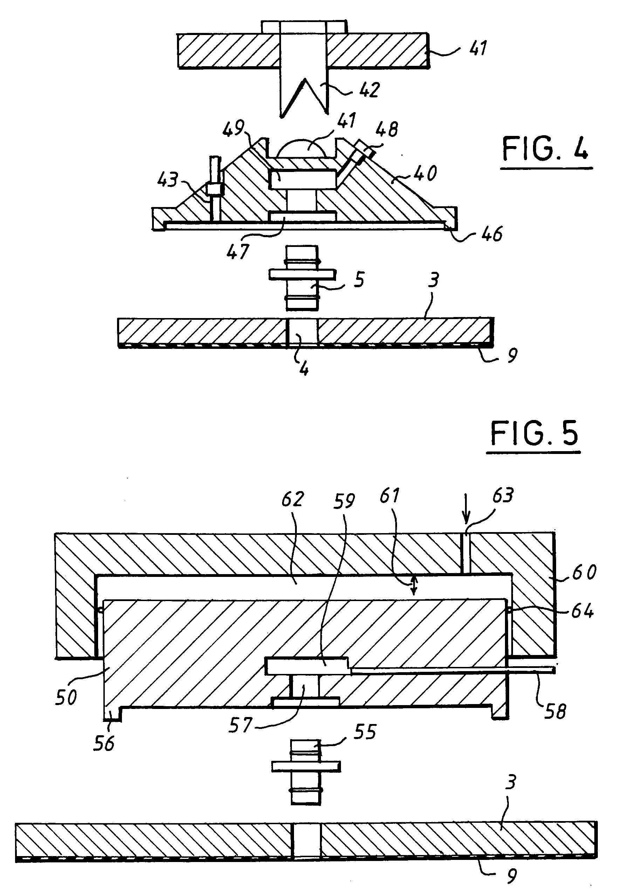

Das Ausführungsbeispiel der Figuren 1 und 2 zeigt ein Festlager, bei dem die Ringauflage (6) direkt mit dem zu lagernden Teil (1) fest verbunden ist. Es gibt auch Maschinenkonstruktionen, die die Verwendung von Festlagern nicht erlauben. Für solche Fälle sind die Gasdrucklager nach den Ausführungsbeispielen der Figuren 4 und 5 gedacht.

In Figur 4 ist ein Grundkörper (40) vorgesehen, der mit einem Gaseinlaß (48) versehen ist. Die Innenbohrung (47) des Grundkörpers (40) hat die gleiche Form wie die Bohrung (7) in Figur 1. Sie dient zum Einsetzen des zylindrischen Einsatzes (5), der seinerseits in die Zentrierbohrung (4) der Scheibe (3) einsetzbar ist. Der Gaseinlaß (48) steht über einen Innenraum (49) mit der Bohrung des Einsatzes (5) in Verbindung.

Im gezeigten Ausführungsbeispiel ist eine Ringauflage (46) direkt aus dem Grundkörper (40) herausgearbeitet. Es ist selbstverständlich möglich die Ringauflage auch anders anzubringen, z.B. sie als gesondertes Bauteil mit dem Grundkörper (40) zu verbinden.

Der Grundkörper (40) trägt eine Lagerkugel (41), die in eine Auflage (42) eingreift, welche mit dem zu lagernden Bauteil (41) fest verbunden ist.

Der Grundkörper (40) ist mit einer Bohrung (43) versehen, welche mit der inneren Lagerkammer in Verbindung steht, welche durch den Grundkörper (40), die Ringauflage (46) und die Scheibe (3) gebildet ist. Über diese Bohrung kann z.B. Luft abgesaugt und dadurch die konkave Durchbiegung der Scheibe unter Last verstärkt werden oder auch umgekehrt.

Es ist selbstverständlich möglich auch in den Ausführungsbeispielen der Figuren 1-3 eine Bohrung zur zusätzlichen Be- oder Entlüftung der inneren Lagerkammer vorzusehen.

Im Ausführungsbeispiel der Figur 5 ist ein Grundkörper (50) vorgesehen, der mit einer Ringauflage (56) fest verbunden ist. Die Bohrung (57) dient zur Aufnahme des Einsatzes (5). Dessen Durchbohrung steht über einen Raum (59) mit dem Gaseinlaß (58) in Verbindung.

Der Grundkörper (50) ist in einem ringförmigen Gehäuse (60) so gelagert, daß er in Richtung des Doppelpfeiles (61) höhenverschiebbar ist. Ein Dichtungsring (64) dient zum gasdichten Abschluß des Innenraumes (62). In diesen führt eine Bohrung (63) über die der Druck im Raum (62) und damit die Lagerkraft einstellbar ist.

Es sind natürlich auch andere Ausbildungen des Grundkörpers (40) bzw. (50) möglich. Diese Grundkörper sind jeweils mit einer Ringauflage versehen, auf welcher die Scheibe (3) lose aufliegt. Wie aus den Figuren 4 und 5 hervorgeht, sind solche Grundkörper einfach und schnell auswechselbar, so daß sich ein Baukastensystem ergibt, für das jedoch nur ein Einsatz (5) und eine Scheibe (3) erforderlich ist.

## Patentansprüche

1. Gasdrucklager, dessen Tragseite als Membran ausgebildet ist, die durch den Lagerdruck konkav verformt wird, wobei die Membran aus einer Scheibe (3) mit einer durchgehenden Zentrierbohrung (4) besteht, auf einem Grundkörper (1) eine Ringauflage (6) befestigt ist und der Grundkörper (1) innerhalb der Ringauflage (6) eine Zentrierbohrung (7) aufweist, die mit einem Gaseinlaß (8) verbunden ist und wobei ein durchbohrter zylinderförmiger Einsatz (5) formschlüssig in die Zentrierbohrungen (4, 7) des Grundkörpers (1) und der Scheibe (3) eingesetzt ist, dadurch gekennzeichnet, daß die Scheibe (3) ein gesondertes Bauteil ist, das lose auf der Ringauflage (6) aufliegt und auf den zylinderförmigen Einsatz (5) aufgesteckt nur durch diesen gehalten und zentriert ist.

2. Gasdrucklager nach Anspruch 1, dadurch gekennzeichnet, daß das vom Lager zu tragende Bauteil (1) selbst als Grundkörper ausgebildet ist und die Ringauflage (6) trägt.

3. Gasdrucklager nach Anspruch 1, dadurch gekennzeichnet, daß der Grundkörper ein gesondertes Bauteil (40, 50) bildet, das auswechselbar fest oder federnd mit dem zu tragenden Bauteil verbindbar ist.

4. Gasdrucklager nach Anspruch 1 und einem der Ansprüche 2 oder 3, dadurch gekennzeichnet, daß die Scheibe (3) auf ihrer Tragseite einen Belag (9) aus Gleitkunststoff trägt.

5. Gasdrucklager nach Anspruch 1-4, dadurch gekennzeichnet, daß der zylinderförmige Einsatz (5) auf seinem der Tragseite der Scheibe (3) zugewandten Ende einen zum Gasauslaß dienenden Düseneinsatz (11) trägt.

6. Gasdrucklager nach Anspruch 5, dadurch gekennzeichnet, daß der zylinderförmige Einsatz (5) aus drei, axial hintereinander angeordneten Abschnitten (13, 14, 15) besteht, wobei der erste (13) den Düseneinsatz (11) trägt und in die Zentrierbohrung (4) der Scheibe (3) eingesetzt ist, der zweite Abschnitt als Scheibe (14) ausgebildet ist, deren Durchmesser größer ist als der des ersten Abschnittes (13) und der dritte Abschnitt (15) einen kleineren Durchmesser aufweist, als die Scheibe (14) und daß der zweite und dritte Abschnitt (14, 15) des Einsatzes (5) formschlüssig so in die Zentrierbohrung (7) des Grundkörpers (1) eingesetzt sind, daß ihre Durchbohrung (10) mit dem Gaseinlaß (8) in Verbindung steht und die tragseitige Fläche des scheibenförmigen, zweiten Abschnittes (14) und die zwischen der Ringauflage (6) des Grundkörpers (1) liegende Fläche (19) eine Ebene bilden.

7. Gasdrucklager nach Anspruch 6, dadurch gekennzeichnet, daß der zylinderförmige Einsatz (5) in seinem ersten und dritten Abschnitt (13, 15) jeweils einen Dichtring (16, 17) trägt.

8. Gasdrucklager nach Anspruch 1 und einem oder mehreren der Ansprüche 2-7, dadurch gekennzeichnet, daß der zwischen Scheibe (3), Ringauflage (6) und Grundkörper (1) gebildete Raum mit einem Anschluß (43) zur Zu- und Abfuhr von Gas versehen ist.

9. Gasdrucklager nach Anspruch 1-8, gekennzeichnet durch seine Verwendung zur Lagerung von Maschinenteilen, insbesondere Teilen einer Mehrkoordinatenmeßmaschine.

## Claims

1. A gas pressure bearing having its bearing side configured as a membrane which is deformed concavely by bearing pressure, wherein said membrane is a disc (3) having a centering bore (4), a circular support (6) is mounted to a base element (1) having a centering bore (7) connected to a gas inlet (8); and wherein a cylindrical insert (5) having a bore is received and fitted within said bores (4,7) of both said base element (1) and said disk (3) in a form-locking manner, characterized by the fact that said disc (3) is a seperate element beeing supported by circular support (6) without beeing fired to it, but is held and centered only by said cylindrical insert (5), when fitted into said insert.

2. The gas pressure bearing of claim 1 wherein the machine component (1) itself, which is carried by the bearing said base element and carries said circular support (6).

3. The gas pressure bearing of claim 1 wherein said base element is separate component (40,50) and is connected fixed but exchangeably or resiliently to the part to be carried.

4. The gas pressure bearing of claim 1 and one of claims 2 or 3 wherein the bearing side of said disc (3) is covered by a plastic material (9).

5. The gas pressure bearing of claim 1-4, wherein said cylindrical insert (5) has one end positioned in proximity to the bearing side of said disc (3), and carries an orifice for acting as a gas outlet at said end.

6. The gas pressure bearing of claim 5 wherein said cylindrical insert (5) further comprises three coaxial sections (13,14,15) said first coaxial section (13) supporting said orifice (11) and being inserted into the center bore (4) of said disc (3); said second coaxial section being configured as a cylinder (14) having a diameter greater than said diameter of said first coaxial section; and said third coaxial section (15) having a diameter smaller than the diameter of said cylinder (14) and wherein the second and third sections (14,15) of said insert (5) are inserted into the center bore (7) of said base element (1) in a form-locking manner so that its bore (10) is in communication with said gas inlet (8), and that the bearing-side surface of said cylindrical second coaxial section (14) and said surface (19) enclosed by said ring support (6) of said base element (1) are in a common plane.

7. The gas pressure bearing of claim 6, wherein said cylindrical insert (5) further carries a first o-ring (16) and a second o-ring (17) on its first and third coaxial section (13,15) respectively.

8. The gas pressure bearing of claim 1 or one or more of claims 2-7, wherein the chamber formed between said disc (3), said circular support (6), and said base element (1) comprises a connecting part (43) for delivering gas to and from said chamber.

9. The gas pressure bearing of claims 1-8 characterized by its use for supporting machine parts, especially of measuring machines.

## Revendications

1. Palier à gaz hydrostatique dont la face portante est constituée par une membrane qui est composée d'un disque (3) doté d'un alésage de centrage bout à bout (4) et qui subit une flexion concave sous l'effet de la pression exercée par la charge, comprenant une bague d'appui (6) montée sur un corps de base (1) qui est muni d'un alésage de centrage (7) disposé à l'intérieur de ladite bague d'appui (6) et communiquant avec un tuyau d'amenée de gaz (8), un module cylindrique percé (5) à engagement positif étant inséré dans les alésages de centrage (4, 7) du corps de base (1) et du disque (3), caractérisé en ce que ledit disque (3) est un élément séparé qui repose sans fixation sur la bague d'appui (6) et qui, enfiché sur le module cylindrique (5), n'est maintenu et centré que par celui-ci.

2. Palier à gaz hydrostatique selon la revendication 1, caractérisé en ce que le composant de machine (1) à supporter par le palier forme lui-même le corps de base portant la bague d'appui (6).

3. Palier à gaz hydrostatique selon la revendication 1, caractérisé en ce que le corps de base est un élément séparé (40, 50) qui peut être remplacé ou relié de façon élastique avec le composant à supporter.

4. Palier à gaz hydrostatique selon la revendication 1 et selon l'une des revendications 2 et 3, caractérisé en ce que le disque (3) est muni sur sa face portante d'un revêtement (9) en une matière plastique à glissement.

5. Palier à gaz hydrostatique selon l'une des revendications 1 à 4, caractérisé en ce que le module cylindrique (5) renferme à son extrémité tournée vers la face portante du disque (3) un étranglement (11) servant de sortie de gaz.

6. Palier à gaz hydrostatique selon la revendication 5, caractérisé en ce que le module (5) est composé de trois segments (13, 14, 15) qui se succèdent en sens axial, dont le premier segment (13) porte l'étranglement (11) et s'insère dans l'alésage de centrage (4) du disque (3), dont le deuxième segment est formé par un disque (14) ayant un diamètre plus grand que le premier segment (13) et dont le troisième segment (15) a un diamètre plus petit que le disque (14), et en ce que le deuxième et le troisième segment (14, 15) du module (5) sont insérés dans l'alésage de centrage (7) du corps de base (1), dont ils épousent la forme, de manière à ce que leur orifice (8) communique avec le tuyau d'amenée de gaz (8) et que la face portante du deuxième segment en forme de disque (14) affleure à la surface (19) du corps de base (1) entourée de la bague d'appui (6).

7. Palier à gaz hydrostatique selon la revendication 6, caractérisé en ce que le module cylindrique (5) porte sur son premier (13) et sur son troisième (15) segment respectivement un joint d'étanchéité (16, 17).

8. Palier à gaz hydrostatique selon la revendication 1 et selon l'une ou plusieurs des revendications 2 à 7, caractérisé en ce que l'espace contenu entre le disque (3), la bague d'appui (6) et le corps de base (1) est pourvu d'un perçage (43) servant à l'amenée et à l'aspiration de gaz.

9. Palier à gaz hydrostatique selon les revendications 1 à 8, caractérisé en ce qu'il est utilisé pour soutenir des pièces de machines, notamment des pièces d'une machine à mesurer multicoordonnées.
